# EUROPEAN PATENT APPLICATION

(11) **EP 4 386 630 A1**
(43) Date of publication of application: **19.06.2024**
(21) Application number: 22214325.7
(22) Date of filing: 16.12.2022
(51) Int. Cl.: G06N 3/049, G06N 3/063, G06N 3/044

(54) **CONTROLLING NEURON FIRING IN A SPIKING NEURAL NETWORK**

(71) Applicant: Imec VZW, 3001 Leuven (BE); Stichting IMEC Nederland, 5656 AE Eindhoven (NL)
(72) Inventor: DETTERER, Paul, 5622 CR Eindhoven (NL); SIFALAKIS, Emmanouil, 6531 RW Nijmegen (NL); CORRADI, Federico, 5622 CG Eindhoven (NL); HARTMANN, Matthias, 3010 Kessel-Lo (BE)
(74) Representative: IP HILLS NV

(57) **Abstract**

Example embodiments relate to a computer-implemented method for controlling the firing of neurons (232, 233, 234) within a neuron layer (231) of a spiking neural network (230). The method comprising, by a handshake controller (220) associated with the neuron layer, receiving (221) a request (251) for firing the neurons and, in response, generating (222) a tick signal (250). The method further comprising, by the respective neurons, updating (212) a neuron state when receiving a neuron input (241, 242, 243); and upon receiving the tick signal, by the respective neurons, firing (215) the respective neurons that fulfil a firing condition based on the neuron state.

## Description

### Field of the Invention

The present invention generally relates to spiking neural networks, in particular to controlling the firing of neurons in a spiking neural network.

### Background of the Invention

Spiking neural networks are artificial neural networks that mimic natural neural networks in that neurons fire or spike at a particular moment in time based on their state, i.e. the neuron state. Upon firing, a neuron generates a spike that carries information to one or more connected neurons through a network of synaptic connections, i.e. synapses. Upon receiving such a spike, the one or more connected neurons may then update their respective neuron states based on the time of arrival of the spike. Therefore, the time of arrival of the spikes and, thus, the timing of neuron firing, may encode information in a spiking neural network.

Spiking neural networks may typically be implemented in a circuitry or may be emulated by software to serve a variety of practical purposes, e.g. image recognition, machine learning, or neuromorphic sensing. This typically requires hardware components and/or processing systems that operate synchronously, i.e. that have a discrete-time architecture. This makes it challenging to implement or emulate a spiking neural network, as neurons in a spiking neural network fire asynchronously and the timing of neuron firing and arrival time of the spikes can directly influence the neuron states. As such, some controlling of the firing of the neurons is typically desired to match the firing with the architecture of the hardware and/or processing systems, i.e. a synchronization method is desired.

Some synchronization methods associate timing information with the spikes characterizing the moment of neuron firing, e.g. by embedding timestamps in the spikes or by exchanging additional packets. This has the problem that data traffic in the spiking neural network increases, resulting in a substantially large inter-node communication bandwidth and messaging overhead. Further problems of existing synchronization methods include limited asynchronous operation of the spiking neural network, the need for queues to handle back pressure, substantially high-frequency clock signals for correct operation, and a low match with software implementations.

Additionally, in some applications, it can be desirable to connect a spiking neural network to an input system that provides input to the spiking neural network and/or an output system that processes the output of the spiking neural network. Typically, such input systems and output systems are characterized by their own time scale which is not matched with the time scales of the neurons within a spiking neural network. It is thus a problem to synchronize the different time scales in such a system.

### Summary of the Invention

It is an object of the present invention, amongst others, to solve or alleviate above identified problems and challenges by improving the controlling of neuron firing in a spiking neural network.

According to a first aspect, this object is achieved by a computer-implemented method for controlling the firing of neurons within a neuron layer of a spiking neural network. The method comprising, by a handshake controller associated with the neuron layer, receiving a request for firing the neurons and, in response, generating a tick signal. The method further comprising, by the respective neurons, updating a neuron state when receiving a neuron input; and upon receiving the tick signal, by the respective neurons, firing the respective neurons that fulfil a firing condition based on the neuron state.

A spiking neural network is an artificial neural network that uses discrete events, i.e. spikes, to propagate information between neurons. The state of a neuron in the spiking neural network, i.e. a neuron state, may depend on the time of arrival of a spike and the information within the received spike, i.e. the neuron input. In other words, both the information included in the received neuron input and the timing of receiving that information may contribute to the state of the neuron. The neuron input may, for example, be a spike fired by a neuron, a weighted spike fired by a neuron, or an input signal of an input system coupled to an input layer of the spiking neural network. The neuron state may, for example, be an integration or aggregation in time of spikes received by a neuron. The handshake controller is configured to generate a tick signal in response to a request and to send or provide the generated tick signal to the respective neurons. The handshake controller may perform handshaking according to an asynchronous handshake protocol such as, for example, four-phase handshaking, two-phase handshaking, pulse-mode handshaking, or single-track handshaking.

The respective neurons perform a set of operations characteristic for a neuron model. The set of operations, i.e. the neuron model, may be separated into two distinct subsets of operations. A first subset of operations may update a neuron state when receiving a neuron input, and a second subset of operations may evaluate the firing condition based on the neuron state when receiving the tick signal. This allows the respective neurons to process neuron inputs asynchronously while synchronizing the firing of the respective neurons within a neuron layer that fulfil the firing condition. In other words, the tick signal allows synchronizing the evaluating of the firing condition within the respective neurons and, as such, the subsequent firing of the respective neurons that fulfil the firing condition. The firing condition may, for example, be fulfilled when a neuron state exceeds a predetermined threshold value. After firing, the neuron state may return to an initial neuron state, or the neuron state may be adjusted according to the firing event.

This has the advantage that the firing of the respective neurons is more predictable, thereby improving the debugging, tracing, and/or simulating of the spiking neural network. This has the further advantage that a spiking neural network can be implemented or emulated more reliably and accurately in a processing system that typically functions synchronously. It is a further advantage that no additional buffers, arbiters, and/or controllers are required to implement the asynchronous processing of neuron inputs in typical hardware applications.

According to an embodiment, the computer-implemented method may further comprise, by the handshake controller, receiving the request for firing the neurons from an input system that is coupled to an input layer of the spiking neural network.

The input system may operate according to a time scale different from the time scale of the spiking neural network, e.g. a neuromorphic sensor, a circuitry, or a processor. Receiving the request for firing the neurons from the input system allows synchronizing the time scale of the input system with the time scale of the spiking neural network. It is a further advantage that an interface may be provided between an input system and a spiking neural network without the input signals affecting the timing of neuron firing. The handshake controller may further be configured to generate an acknowledgment in response to the request and to transmit the generated acknowledgement to the input system.

According to an embodiment, the computer-implemented method may further comprise, by the respective neurons, receiving the neuron input from the input system.

The input system may thus provide neuron inputs to one or more neurons within the input layer of the spiking neural network. The neuron inputs received from the input system are processed when receiving the neuron inputs by the respective neurons, i.e. asynchronously. The neuron inputs may be processed without a substantial delay and/or without substantial pre-processing after receiving the neuron input. The resulting neuron states are evaluated synchronously when receiving the tick signal, thereby allowing interpreting the neuron inputs received from the input system as if they would have been received at substantially the same time. This allows reducing the complexity of modelling and simulating a spiking neural network coupled to an input system, as the neuron inputs need not be valid at the same time, i.e. at the time of of evaluating the firing condition.

According to an embodiment, the computer-implemented method may further comprise by the handshake controller, transmitting a request for accepting an output of the spiking neural network to an output system that is coupled to an output layer of the spiking neural network.

The output system may be a system configured to post-process an output of the spiking neural network, i.e. neuron outputs or spikes generated by the neurons within the output layer of the spiking neural network. The output system may operate according to a time scale different from the time scale of the spiking neural network it is coupled to. The output system may, for example, be a central processing unit, CPU, a graphical processing unit, GPU, an AI accelerator such as a tensor processing unit, TPU, or a convolutional neural network, CNN. The output system may operate according to a discrete-time architecture. The handshake controller associated with the output layer of the spiking neural network may generate a request for accepting the output of the spiking neural network by the output system, i.e. the spikes generated upon firing the neurons in the output layer.

According to an embodiment, the computer-implemented method may further comprise, by the handshake controller, delaying the generating of the tick signal until receiving an acknowledgment from the output system, wherein the acknowledgement is indicative for a consent to receive the output of the spiking neural network.

In other words, the handshake controller associated with the output layer of the spiking neural network may wait until receiving the acknowledgment from the output system. This acknowledgment indicates that the output system is ready to receive the output of the spiking neural network. This allows synchronizing the time scale of the output system with the time scale of the spiking neural network. It is a further advantage that an interface can be provided between a spiking neural network and an output system operating according to different time scales.

According to an embodiment, the spiking neural network comprises a sequence of connected neuron layers and a plurality of handshake controllers associated with the respective neuron layers.

The spiking neural network may thus comprise a plurality of successive neuron layers. One or more neurons within these successive neuron layers may be connected. In other words, at least one neuron within a successive neuron layer may receive a spike from a neuron within the preceding neuron layer. A neuron may receive spikes from one or more connected neurons. The respective handshake controllers associated with the respective connected neuron layers may each generate a respective tick signal in response to receiving a respective request for firing the neurons within the respective connected neuron layers. The respective tick signals thus allow controlling the propagation of spikes, i.e. information, through a spiking neural network.

According to an embodiment, the spiking neural network may be a recurrent spiking neural network, the spiking neural network may comprise a multi-layer to single-layer connection, the spiking neural network may comprise a single-layer to multi-layer connection, and/or the spiking neural network may comprise a multi-layer to multi-layer connection.

A recurrent spiking neural network may be a spiking neural network that comprises at least one of a lateral connection, a feedback connection, and a self connection within at least one neuron layer.

A multi-layer to single-layer connection may be a network of synaptic connections between two or more neuron layers and a single successive neuron layer. In other words, neurons within a plurality of parallel neuron layers may be connected to neurons within a single successive neuron layer.

A single-layer to multi-layer connection may be a network of synaptic connections between a single neuron layer and two or more successive neuron layers. In other words, neurons within a single neuron layer may be connected to neurons within a plurality of parallel neuron layers.

A multi-layer to multi-layer connection may be a network of synaptic connections between two or more neuron layers and two or more other successive neuron layers. In other words, neurons within a plurality of parallel neuron layers may be connected to neurons within a plurality of parallel successive neuron layers.

Parallel neuron layers, i.e. a multi-layer, may be neuron layers that receive a request for firing their neurons at substantially the same time. As such, neurons that fulfil the firing condition within parallel neuron layers, i.e. a multi-layer, may fire at substantially the same time.

According to an embodiment, the computer-implemented method may further comprise receiving the request for firing the neurons from one or more handshake controllers associated with respective preceding neuron layers.

The request for firing the neurons may be received: i) after the one or more handshake controllers associated with the respective preceding neuron layers received a request for firing, ii) after generating a tick signal by the one or more handshake controllers associated with the respective preceding neuron layers, or iii) after firing of the neurons within the respective preceding neuron layers. In doing so, the one or more handshake controllers associated with preceding neuron layers may signal a handshake controller associated with a successive neuron layer to evaluate the firing condition of the neurons within the neuron layer, i.e. by triggering the generating of a tick signal in the handshake controllers. This allows controlling the propagation of spikes through the spiking neural network. This can improve the pipelining or chaining of neuron layers within a spiking neural network.

According to an embodiment, the computer-implemented method may further comprise, by a handshake controller associated with a neuron layer, forwarding a request for firing the neurons to one or more handshake controllers associated with respective successive neuron layers.

A request for firing the neurons within a neuron layer may thus be propagated to the respective handshake controllers associated with successive neuron layers. In doing so, a relative spike-timing between nodes within successively connected neuron layers can be maintained as the time difference of neuron firing in successively connected neuron layers is controlled. As such, spikes can be propagated through the spiking neural network without explicitly exchanging timing information indicative of the moment of neuron firing, i.e. without adding timestamps to the spikes or sending additional packets. This has the advantage that messaging overhead and inter-node communication bandwidth can be limited, thereby reducing data traffic in the spiking neural network. It is a further advantage that pipelining or chaining of neuron layers within a spiking neural network can be improved. It is a further advantage that forwarding of requests in multi-layer to single-layer connections and single-layer to multi-layer connections can be achieved by means of existing data flow techniques in the field of asynchronous circuit design.

According to an embodiment, the computer-implemented method may further comprise, by the handshake controller, delaying the generating of the tick signal until receiving an acknowledgment from the one or more handshake controllers associated with the respective successive neuron layers, wherein the acknowledgement is indicative for the neurons within the respective successive neuron layers being available to evaluate the firing condition.

In other words, a handshake controller may wait until receiving the acknowledgment from one or more handshake controllers associated with successively connected neuron layers that the neurons within the successively connected neuron layers are ready to receive spikes, process spikes, and/or evaluate the firing condition. This allows synchronizing the time scale of different neuron layers within the spiking neural network. It is a further advantage that synchronization between neuron layers can be maintained even when a plurality of neurons are connected to the same neuron. Delaying the generating of the tick signal until receiving the acknowledgement further allows avoiding that neurons in a successive neuron layer are occupied, i.e. unavailable to evaluate the firing condition. This has the further advantage that backpressure in the successive neuron layer can be avoided, which can affect the neuron states in the successive neuron layer by affecting the time of arrival of spikes.

According to an embodiment, the computer-implemented method may further comprise, by the handshake controller, delaying the generating of the tick signal until receiving an additional signal from one or more neurons within the neuron layer associated with the handshake controller, wherein the additional signal is indicative for a respective neuron within the neuron layer being available to fire.

This can allow only evaluating the firing condition for neurons that are available to fire. This can further allow asynchronous firing of neurons within a neuron layer, as the tick signal may be generated by the handshake controller when receiving a request for firing the neurons in addition to at least one additional signal from a neuron. Alternatively, or complementary, a handshake controller may generate a tick signal when receiving, in addition to the request for firing the neurons and the additional signal, an acknowledgment from one or more handshake controllers associated with one or more successive neuron layers. This can further allow asynchronous firing of neurons within a neuron layer while maintaining synchronization between successive neuron layers.

According to a second aspect, the object is achieved by a data processing system configured to perform the computer-implemented method according to the first aspect.

According to a third aspect, the object is achieved by a computer program comprising instructions which, when the computer program is executed by a computer, cause the computer to perform the computer-implemented method according to the first aspect.

According to a fourth aspect, the object is achieved by a computer-readable medium comprising instructions which, when executed by a computer, cause the computer to perform the computer-implemented method according to the first aspect.

### Brief Description of the Drawings

Fig. 1 shows an example of a spiking neural network;
Fig. 2 shows steps of a computer-implemented method for controlling the firing of neurons within a neuron layer of a spiking neural network, according to an embodiment;
Fig. 3 shows a spiking neural network that is coupled to an input system and an output system, according to embodiments;
Fig. 4 shows a spiking neural network comprising a sequence of connected neuron layers and a plurality of handshake controllers associated with the respective neuron layers, according to embodiments;
Fig. 5 shows a spiking neural network comprising a sequence of connected neuron layers with a multi-layer to single-layer connection and a single-layer to multi-layer connection, according to embodiments;
Fig. 6 shows an example embodiment of a spiking neural network comprising a multi-layer to multi-layer connection; and
Fig. 7 shows an example embodiment of a suitable computing system for performing steps according to example aspects of the invention.

### Detailed Description of Embodiment(s)

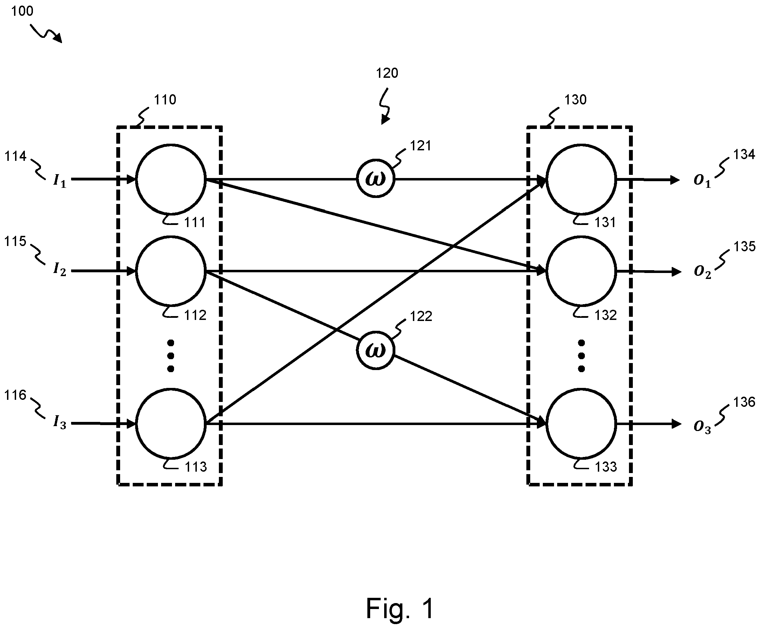

Fig. 1 shows an example of a spiking neural network 100. The spiking neural network 100 may comprise a plurality of neurons 111 - 113, 131 - 133 that are grouped into one or more neuron layers 110, 130. Neurons 111 - 113 within a first neuron layer 110 may typically be connected to neurons 131 - 133 within a second neuron layer 130 by means of a network of synaptic connections 120, i.e. synapses. Neuron layer 130 may be referred to as a successive neuron layer relative to neuron layer 110, and neuron layer 110 may be referred to as a preceding layer relative to neuron layer 130, as a substantial number of feed-forward connections 120 are provided between the neurons 111 - 113 within neuron layer 110 and the neurons 131 - 133 within neuron layer 130. In other words, information may generally flow from neuron layer 110 to neuron layer 130. In yet other words, neuron layer 110 and neuron layer 130 may be referred to as a sequence of connected neuron layers. It will be apparent that, in addition to the feed-forward connections 120, neurons 111 - 113, 131 - 133 may further be connected to neurons within the same neuron layer and/or neurons within a preceding neuron layer, e.g. by means of lateral connections or feedback connections. It will further be apparent that, for clarity, Fig. 1 illustrates a spiking neural network 100 having a limited number of neuron layers 110, 130, a limited number of neurons 111 - 113, 131 - 133, and a limited number of synaptic connections 120.

The neurons 111 - 113 within neuron layer 110 may receive input signals 114 - 116, i.e. neuron inputs. These neuron inputs 114 - 116 may, for example, be currents, voltages, real numerical values, complex numerical values. These neuron inputs 114 - 116 may be accumulated by the respective neurons 111 - 113 in a neuron state until a threshold is exceeded that triggers the respective neurons 111 - 113 to generate a neuron output, i.e. to spike or to fire. In other words, neuron inputs may be accumulated until the neuron inputs are sufficiently cumulative to prompt the firing of the neuron. The neuron output generated by firing a neuron may also be referred to as a spike. Upon firing, a neuron generates a spike that travels through a network of synaptic connections 120 to the connected neurons. For example, upon firing of neuron 111, a spike is transmitted to neurons 131 and 132. The spikes generated by neurons 111 - 113 in neuron layer 110 may thus be the neuron inputs for neurons 131 - 133 in the successive neuron layer 130. These neurons 131 - 133 may in turn accumulate the received neuron inputs in a neuron state.

Spikes can encode information by the presence of the spike, by the time of arrival of the spike, by the frequency of received spikes, and/or by the neuron that fired the spike. Spiking neural networks may thus incorporate the concept of time into their operating model, in addition to neuron state and synaptic state. Spikes may further be weighted according to adjustable or predetermined weights 121, 122 associated with specific synaptic connections. For example, weight 121 may increase or decrease the neuron output generated by neuron 111 before being received by neuron 131. Typically, the values of the weights 121, 122 are determined by training the spiking neural network according to a learning rule, e.g. according to the spike-timing-dependent plasticity, STDP, learning rule, the Bienenstock-Copper-Munro, BCM, learning rule, or the Hebb learning rule.

Spiking neural networks may be used in a large variety of applications such as, for example, image recognition, pattern recognition, machine learning, process control, and neuromorphic sensing. To this end, a spiking neural network 100 may be implemented in a circuitry comprising a general purpose processor; an application specific integrated circuit, ASIC; a programmable logic device; an artificial intelligence, AI, accelerator; a field programmable gate array, FPGA; discrete logic gates; discrete transistor logic; discrete hardware components; or a combination thereof. Alternatively, or complementary, a spiking neural network 100 may be emulated by software, e.g. computer code, executed on a general purpose processor, AI accelerator, or any other suitable data processing system.

A problem of implementing or emulating spiking neural networks 100 is that hardware circuitries and data processing systems typically operate synchronously, while the neurons 114 - 116, 131 - 133 within the spiking neural network 100 operate asynchronously. In other words, hardware circuitries and processing systems typically have a discrete-time architecture that allows neurons to exchange spikes every time-step. This makes it challenging to implement or emulate the asynchronous behaviour of spiking neural networks 100 reliably and accurately, in particular because the timing of neuron firing and arrival time of spikes can directly influence the state of a neuron. As such, implementing or emulating a spiking neural network 100 typically requires some controlling of the firing to synchronize the neurons.

In order to address this synchronization problem, existing synchronization methods typically add timing information to the spikes, e.g. by sending a timestamp or packet indicative for the time of firing a spiking neuron to the receiving neurons in addition to the spike. This has the problem that data traffic in the spiking neural network 100 increases, resulting in a substantially large inter-node communication bandwidth and messaging overhead. Other existing synchronization methods, e.g. clocked spiking neural networks or virtualization of neurons, may limit the asynchronous operation of the spiking neural network, require queues, require substantially high-frequency clock signals to approximate asynchronous operation, do not account for back pressure, and/or have a low match with software implementations.

Additionally, in some applications, such as neuromorphic sensing, it can be desirable to connect a spiking neural network 100 to an input sensor, e.g. a neuromorphic camera or event camera. This input sensor may then provide input signals 114, 115, 116 to the connected spiking neural network 100. Typically, such input sensors or devices are characterized by their own time scale which is not related to the time scales of the neurons 111 - 113, 134 - 136 within the spiking neural network 100. The spiking neural network 100 may further be connected to an output system, e.g. a central processing unit, CPU, or an AI accelerator, that receives and processes the output 134, 135, 136 of the spiking neural network 100. Typically, such an output system is characterized by its own time scale which is not related to the time scales of the neurons 111 - 113, 134 - 133 within the spiking neural network 100. It is thus a further challenge to synchronize the different time scales in a system that includes a spiking neural network 100, e.g. to synchronize the time scales of an input sensor, the neurons within a spiking neural network, and an output system. It may thus be desirable to provide a solution capable of synchronizing different time scales in a system that includes a spiking neural network, in addition to supporting substantial asynchronous operation of the neurons in an efficient way.

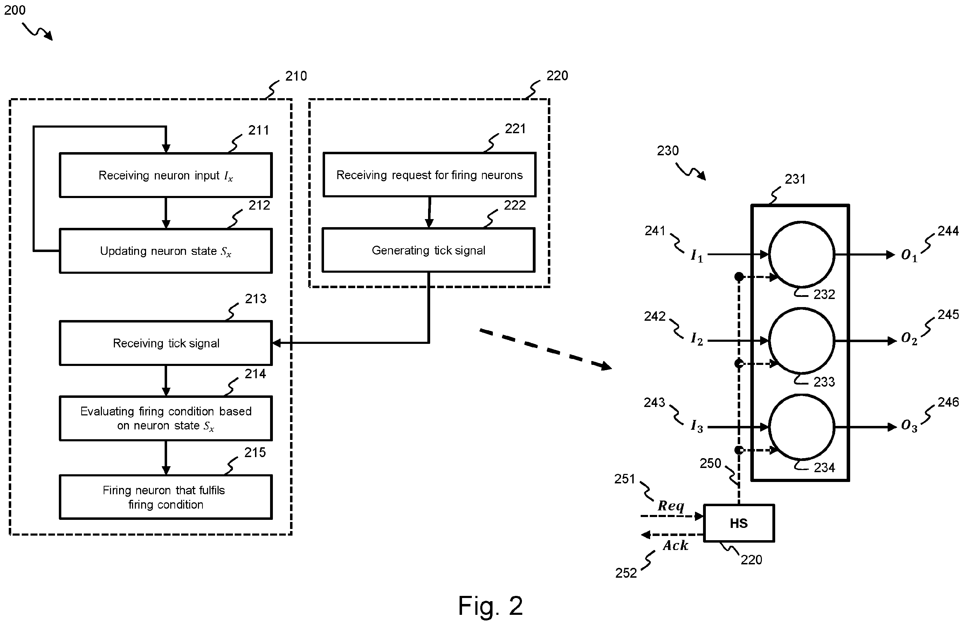

Fig. 2 shows steps of a computer-implemented method 200 for controlling the firing of neurons 232, 233, 234 within a neuron layer 231 of a spiking neural network 230, according to an embodiment. The firing of the neurons 232, 233, 234 is controlled by means of a tick signal 250 that is generated by a handshake controller 220 associated with the neuron layer 231. The respective neurons 232, 233, 234 perform steps 210 by performing a set of operations characteristic for a neuron model. Performing the set of operations, i.e. executing the neuron model, may be achieved by executing a computer code on a processor, wherein the computer code comprises instructions causing the processor to perform steps 210 upon execution of the computer code. In other words, the respective neurons 232, 233, 234 may be indicative for computer code that implements a neuron model. Alternatively or complementary, executing a neuron model may be achieved by a circuitry configured to perform the set of operations, thereby performing steps 210. In other words, the respective neurons 232, 233, 234 may be indicative for a circuitry that implements a neuron model. It will be apparent that the respective neurons 232, 233, 234 within a neuron layer 231 may implement different neuron models that, for example, process neuron inputs or evaluate the firing condition differently. It will further be apparent that neuron layer 231 may comprise a substantially larger or smaller amount of neurons 232, 233, 234 than illustrated in Fig. 2.

The set of operations of a neuron model may be separated into two subsets, i.e. a first subset of operations and a second subset of operations. Performing the first subset of operations may result in performing steps 211 and 212, while performing the second subset of operations may result in performing steps 213, 214, and 215.

The first subset of operations performed by a neuron 232, 233, 234 includes receiving a neuron input 241, 242, 243 in step 211. The neuron input 241, 242, 243 may, for example, be a spike fired by a connected neuron, a weighted spike fired by a connected neuron, or an input signal from an input system such as a sensor. The neuron input 241, 242, 243 may, for example, be a current, a voltage, a real numerical value, or a complex numerical value.

When receiving a neuron input 241, 242, 243, the respective neurons 232, 233, 234 update their neuron state in step 212. Thus, the first subset of operations includes updating the neuron state of a neuron 232, 233, 234 when that neuron receives a neuron input 241, 242, 243. In other words, the first subset of operations of the neuron model is event-driven. The neuron state may for example be, amongst others, a current, a voltage, a real numerical value, or a complex numerical value. The neuron input 241, 242, 243 may be processed without a substantial delay and/or without substantial pre-processing after receiving the neuron input. This allows the respective neurons 232, 233, 234 to process neuron inputs 241, 242, 243 asynchronously, i.e. when a neuron input 241, 242, 243 arrives at the respective neurons 232, 233, 234. This has the advantage that desired asynchronous behaviour can be implemented in the spiking neural network 230 without additional queues, arbiters, and/or controllers, e.g. compared to packetized spike transmission or packet-based neuron synchronization with explicit time tracking.

Updating the neuron state in step 212 may, for example, include aggregating the received neuron inputs 241, 242, 243 in time, integrating the received neuron inputs 241, 242, 243 in time, or leaky integration of the received neuron inputs 241, 242, 243 in time. Leaky integration in time may comprise integrating the received neuron inputs 241, 242, 243 to obtain a neuron state, while gradually losing, i.e. leaking, a predetermined amount of neuron state over time, e.g. as implemented in the leaky integrate and fire, LIF, neuron model.

Steps 220 may be performed by handshake controller 220 associated with the neuron layer 231. The handshake controller 220 may perform handshaking according to an asynchronous handshake protocol such as, for example, four-phase handshaking, two-phase handshaking, pulse-mode handshaking, or single-track handshaking. In a first step 221, the handshake controller 220 receives a request 251 for firing the neurons 232, 233, 234 within the associated neuron layer 231. The request 251 may, for example, be a binary signal. In a following step 222, the handshake controller 220 generates a tick signal 250 in response to request 251. The generated tick signal 250 is then provided to the respective neurons 232, 233, 234. In other words, generating the tick signal 250 may be controlled by providing request 251 to the handshake controller 220, e.g. by a sender. The handshake controller 220 may further be configured to acknowledge the reception of the request 251 and/or the generating of the tick signal 250 by means of an acknowledgment 252. The acknowledgment may, for example, be a binary signal.

In step 213, the respective neurons 232, 233, 234 receive the generated tick signal 250, thereby initiating or triggering the performing of the second subset of operations of the neuron model. In a following step 214, the respective neurons 232, 233, 234 evaluate a firing condition based on their current neuron state. The firing condition may, for example, be a predetermined threshold value for the neuron state or a variable threshold value for the neuron state. The firing condition may be substantially the same for the respective neurons 232, 233, 234 within a neuron layer 231. Alternatively or complementary, one or more respective neurons 232, 233, 234 within a neuron layer may have substantially different firing conditions. Evaluating the firing condition in step 214 may, for example, include comparing the current neuron state of a neuron 232, 233, 234 to the firing condition of said neuron 232, 233, 234. If the neuron state fulfils the firing condition, e.g. if the neuron state exceeds a predetermined threshold, the neuron fires, i.e. generates a spike or neuron output 224, 245, 246. The generated spike or neuron output 244, 245, 246 may be received by one or more connected neurons or may be received by an output system coupled to an output layer of the spiking neural network. After firing, a neuron 232, 233, 234 may return to an initial neuron state or the neuron state may be adjusted according to the firing event, e.g. by reducing the neuron state by a predetermined amount.

Thus, neurons 232, 233, 234 only evaluate whether they meet the firing condition to fire a spike upon receiving the tick signal 250 from the handshake controller 220. In other words, steps 213, 214, 215, i.e. the second subset of operations of the neuron model, are only performed by the respective neurons 232, 233, 234 upon receiving a tick signal and, may be performed substantially simultaneous by the respective neurons 232, 233, 234. On the other hand, steps 211 and 212, i.e. the first subset of operations of the neuron model, are performed by the respective neurons 232, 233, 234 when receiving a neuron input 241, 242, 243 and, may be performed by a neuron irrespective of whether the other neurons received a neuron input.

This allows synchronizing the evaluating of the firing condition within the respective neurons and the subsequent firing of the respective neurons 232, 233, 234 that fulfil the firing condition. As such, the firing of the neurons 232, 233, 234 within a neuron layer 231 can be synchronized while still allowing asynchronous processing of neuron inputs 241, 242, 243. This is an advantage as the time of arrival of a neuron input 241, 242, 243 contributes to the neuron state of the receiving neuron, i.e. as the time of arrival of neuron inputs encode information in a spiking neural network.

This synchronization makes the firing of the respective neurons 232, 233, 234 more predictable, thereby improving the debugging, tracing, and simulating of the spiking neural network. This has the further advantage that a spiking neural network can be implemented or emulated more reliably and accurately, as the processing system that implements or emulates the spiking neural network typically operates synchronously, i.e. the processing system operates according to a discrete-time architecture.

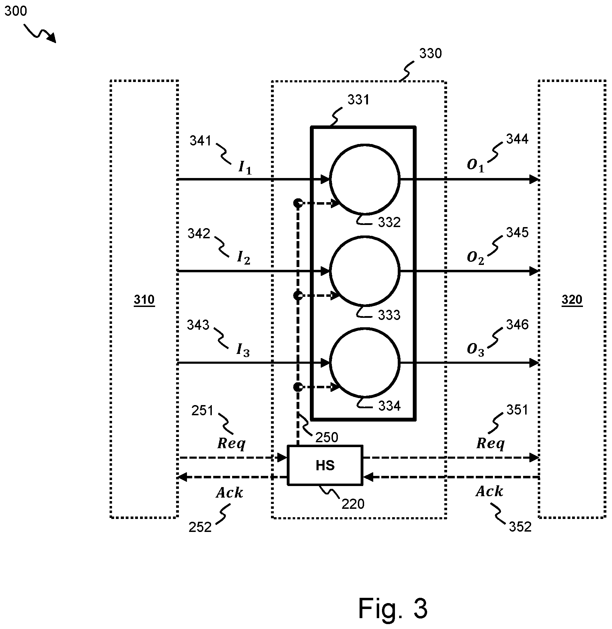

Fig. 3 shows a spiking neural network 330 that is coupled to an input system 310 and an output system 320, according to embodiments. For clarity, the spiking neural network 330 shown in Fig. 3 comprises a single neuron layer 331. It will be apparent that, in the example embodiment of Fig. 3, neuron layer 331 is both an input layer of the spiking neural network 330 and an output layer of the spiking neural network 330, as the neurons 332, 333, 334 in neuron layer 331 receive neuron inputs 341, 342, 343 from input system 310 and provide their spikes 344, 345, 346 to output system 320.

Input system 310 may operate according to a time scale different from the time scale of the spiking neural network 330 it is coupled to, e.g. a neuromorphic camera, a neuromorphic sensor, a circuitry, or a processor. The input system 310 may provide neuron inputs 341, 342, 343 to one or more neurons 332, 333, 334 within the input layer 331 of the spiking neural network 330. For example, a neuromorphic camera or event camera may provide signals indicative for changes observed in a group of pixels to neurons 332, 333, 334 as respective neuron inputs 341, 342, 343. These neuron inputs 341, 342, 343 are processed upon receiving the inputs by the respective neurons 332, 333, 334, by updating the respective neuron states.

In addition to providing the neuron inputs 341, 342, 343 to the input neuron layer 331 of the spiking neural network 330, the input system may generate the request 251 for firing the neurons and provide the request 251 to handshake controller 220. Alternatively or complementary, the request 251 may be generated and provided by an additional device, e.g. a handshake controller associated with input system 310.

Receiving the request 251 for firing the neurons 332, 333, 334 from the input system 310 allows synchronizing the time scale of the input system with the time scale of the spiking neural network 330, i.e. with the time scale of firing the respective neurons 332, 333, 334 in the input layer 331. It is thus an advantage that an interface may be provided between an input system and a spiking neural network without the input signals 341, 342, 343 affecting the timing of neuron firing. The handshake controller 220 may further be configured to send an acknowledgement 252 to the input system 310 after successfully receiving the request 251. Alternatively, the acknowledgement 252 may only be sent when the tick signal 250 has been generated.

Output system 320 may be a system configured to post-process an output 344, 345, 346 of the spiking neural network 320. Herein, an output may refer to a plurality of neuron outputs or spikes generated by the neurons 332, 333, 334 within an output layer 331 of the spiking neural network 330. Output system 320 may be a processing element or processing system that operates according to a time scale different from the time scale of the spiking neural network 330 it is coupled to, e.g. a central processing unit, CPU, graphical processing unit, GPU, an AI accelerator such as a tensor processing unit, TPU, or a convolutional neural network, CNN. The output system 320 may operate according to a discrete-time architecture.

The handshake controller 220 associated with the output layer 331 of the spiking neural network 330 may further be configured to transmit a request 351 for accepting the output 344, 345, 346 to the output system 320. This request 351 may be generated by handshake controller 220 when receiving the request 251 for firing the neurons within the output layer 331. Upon receiving request 351, the output system may determine whether it is ready or available to receive the output 344, 345, 346 of the spiking neural network 330. If so, output system 320 may signal its availability or consent to receive the output 344, 345, 346 by sending an acknowledgement 352 to the handshake controller 220. Alternatively or complementary, determining the availability of output system 320 to receive the output 344, 345, 346 and generating the acknowledgment 352 may be performed by an additional device, e.g. a handshake controller associated with output system 320.

The handshake controller 220 may further delay the generating of the tick signal 250 until receiving the acknowledgement 352. In other words, handshake controller 220 associated with the output layer 331 of the spiking neural network 330 may wait to instruct neurons 332, 333, 334 to evaluate their firing condition until receiving the acknowledgment 352 from the output system 320 that the output system is ready to receive the resulting spikes, i.e. the output 344, 345, 346. This allows synchronizing the time scale of the output system 320 with the time scale of the spiking neural network 330. It is thus an advantage that an interface can be provided between a spiking neural network and an output system operating according to different time scales.

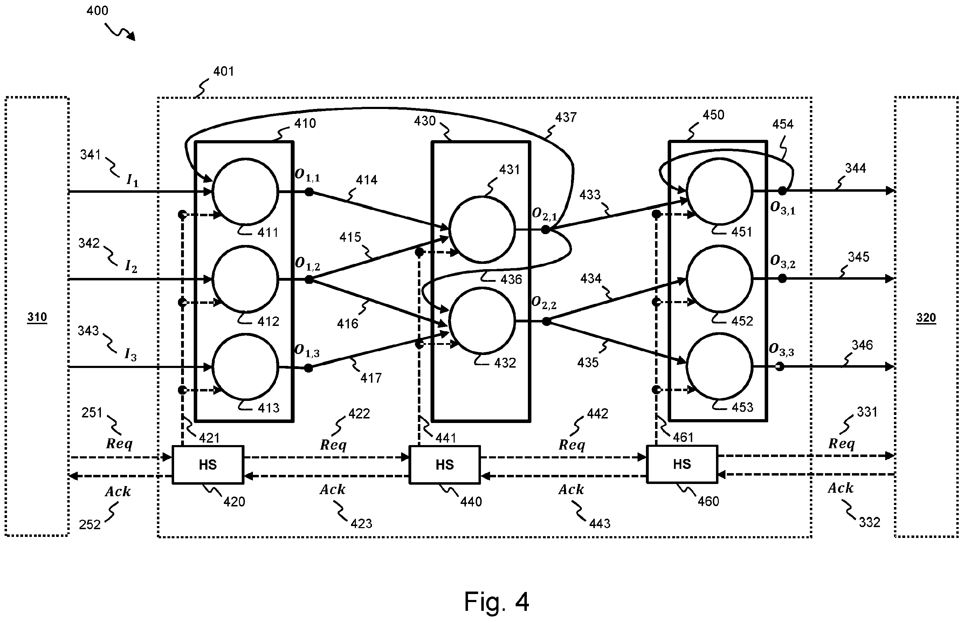

Fig. 4 shows a spiking neural network 401 comprising a sequence of connected neuron layers 410, 430, 450 and a plurality of handshake controllers 420, 440, 460 associated with the respective neuron layers, according to embodiments. The input layer 410 of the spiking neural network 401 may be coupled to an input system 310 and the output layer 450 of the spiking neural network 401 may be coupled to an output system 320, as described above in relation to Fig. 3. It will be apparent that spiking neural network 401 may comprise fewer or substantially more neuron layers 410, 430, 450, and that the neuron layers 410, 430, 450 may comprise fewer or substantially more neurons than shown in Fig. 4.

The neurons 411, 412, 413 within the input layer 410 may receive neuron inputs 341, 342, 343 from input system 310. These neuron inputs 341, 342, 343 are processed upon reception by the respective neurons 411, 412, 413 by updating the respective neuron states. At a certain moment in time, the handshake controller 420 associated with input layer 410 may receive a request 251 for firing the neurons 411, 412, 413 from the input system 310.

In response to request 251 for firing neurons 411, 412, 413, handshake controller 420 may forward a request 422 for firing neurons 431, 432 to handshake controller 440 associated with the successive neuron layer 430. Handshake controller 420 may delay, i.e. wait, to generate the tick signal 421 until receiving an acknowledgment 423 from the successive handshake controller 440 that is indicative for neurons 431, 432 being available to evaluate their firing condition. A neuron may, for example, be available to evaluate its firing condition when sufficient computing resources are available to perform the second subset of operations of the neuron model, as described in relation to Fig. 2.

Upon receiving the acknowledgement 423, handshake controller 420 may generate the tick signal 421 and provide the signal to neurons 411, 412, 413. In doing so, the respective neurons 411, 412, 413 are instructed to evaluate their current neuron state and fire spikes *O*_{1,1}, *O*_{1,2}, *O*_{1,3} if the neuron state fulfils a firing condition. These spikes are then provided to neurons 431, 432 within the successive neuron layer 430 through a network of synaptic connections 414, 415, 416, 417.

Request 422 for firing neurons 431, 432 may in turn prompt handshake controller 440 to forward a request 442 for firing neurons 451, 452, 453 to a handshake controller 460 associated with a successive neuron layer 460. Handshake controller 440 may, similarly to handshake controller 420, also delay the generating of tick signal 441 until receiving acknowledgment 443 from the successive handshake controller 460 that is indicative for neurons 451, 452, 453 being available to evaluate their firing condition. Upon receiving said acknowledgment 443, handshake controller 440 may generate the tick signal 441 and provide the signal to neurons 431, 432. In doing so, the respective neurons 431, 432 are instructed to evaluate their current neuron state and fire spikes *O*_{2,1}, *O*_{2,2} if the neuron state fulfils a firing condition. These spikes are then provided to neurons 451, 452, 453 of the successive neuron layer 460 through a network of synaptic connections 433, 434, 435.

The spiking neural network 401 may further comprise lateral synaptic connections, such as for example 436, that connect a neuron 431 with another neuron 432 within the same neuron layer 430. In other words, spike *O*_{2,1} fired by neuron 431 may be provided to neuron 432 as a neuron input by means of lateral connection 436. The spiking neural network 401 may further comprise feedback connections and/or self connections. A feedback connection may connect the neuron output of a neuron to the neuron input of a neuron within a preceding neuron layer, e.g. synaptic connection 437. A self connection may connect the neuron output of a neuron to the neuron input of the same neuron, e.g. synaptic connection 454. Spiking neural network 401 may thus be a recurrent spiking neural network, RSNN, also sometimes referred to as recursive spiking neural network.

Request 442 for firing neurons 451, 452, 453 may in turn prompt handshake controller 460 to transmit a request 331 for accepting an output 344, 345, 346 of the spiking neural network 401 to output system 320. Handshake controller 460 may delay the generating of the tick signal until receiving an acknowledgment 332 from the output system. The acknowledgment 332 may be indicative for a consent to receive the output 344, 345, 346 of the spiking neural network.

Thus, a request 251 for firing neurons within an input neuron layer 410 of the spiking neural network 401 may be propagated to the handshake controllers 440, 460 associated with the successive neuron layers 430, 450, and to output system 320 by means of requests 422, 442, 331. In doing so, a relative spike-timing between nodes within successively connected neuron layers 410, 430, 450 can be maintained as the time difference of neuron firing in successively connected neuron layers may be controlled. In other words, time may be tracked implicitly as the time difference of firing events between successively connected neuron layers may be controlled by the handshake controllers 420, 440, 460. For example, the time difference between the firing of neurons in a preceding neuron layer 410 and the firing of neurons in a successive neuron layer 430 may be controlled to be one time, e.g. a clock tick of a processor. This allows synchronizing the time scale of different neuron layers 410, 430, 450 within the spiking neural network. As such, spikes can be propagated through the spiking neural network 401 without explicitly exchanging timing information indicative of the moment of neuron firing, i.e. without adding timestamps to the spikes or sending additional packets. This has the advantage that messaging overhead and inter-node communication bandwidth can be limited, thereby reducing data traffic in the spiking neural network. This improves the pipelining or chaining of neuron layers 410, 430, 450 within a spiking neural network 401. It is a further advantage that synchronization between neuron layers can be maintained even when a plurality of neurons, e.g. 412 and 413, are connected to the same neuron, e.g. 432.

Delaying the generating of the tick signal 421, 441 until receiving acknowledgements 423, 443 further allows avoiding that neurons in a successive neuron layer are occupied, i.e. unavailable to evaluate the firing condition and/or receive spikes. This has the further advantage that backpressure in a successive neuron layer can be avoided, which can affect the neuron states in the successive neuron layer by affecting the time of arrival of spikes.

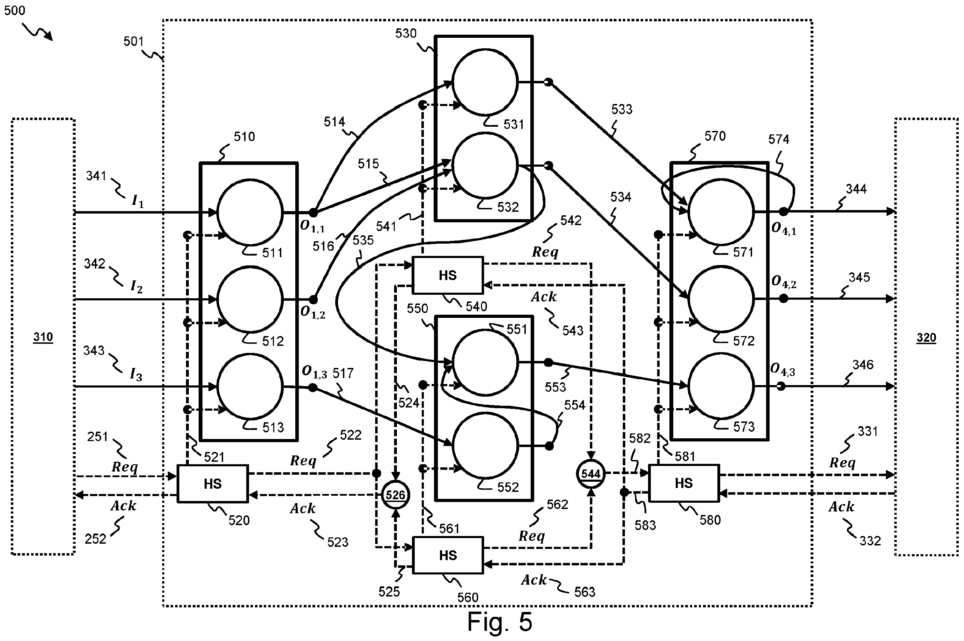

Fig. 5 shows a spiking neural network 501 comprising a sequence of connected neuron layers with a multi-layer to single-layer connection 533, 534, 553 and a single-layer to multi-layer connection 514, 515, 516, 517, according to embodiments.

A single-layer to multi-layer connection may be a network of synaptic connections 514, 515, 516, 517 between a single neuron layer 510 and two or more successive neuron layers 530, 550. In other words, neurons within a neuron layer 510 may be connected to neurons within a plurality of parallel neuron layers 530, 550. The parallel neuron layers 530, 550, i.e. the multi-layer, may be neuron layers that receive a request for firing their neurons at substantially the same time. As such, neurons that fulfil the firing condition within parallel neuron layers, i.e. a multi-layer, may fire at substantially the same time. The request may be received from the handshake controller 520 associated with the single neuron layer 510.

This may be achieved by providing the same request 522 to both the respective handshake controllers 540, 560 associated with parallel neuron layers 530, 550. Handshake controller 520 may then receive acknowledgment 523 if both handshake controller 540 and 560 acknowledge 524, 525 the request. This may be achieved by an element 526 that outputs an acknowledgement signal 523 if the element 526 receives an acknowledgment 524, 525 from all respective handshake controllers 540, 560 within a multi-layer, i.e. element 526 may operate substantially as a logic AND gate. Element 526 may, for example, be a Muller C-element or computer code. Alternatively, neuron layer 530 and neuron layer 550 may be associated to a single handshake controller. It will be apparent that neurons within the different neuron layers 530, 550 of a multi-layer may be connected, e.g. by synaptic connection 535. It will further be apparent that one or more neurons in the spiking neural network 501 may not be connected to a successive neuron layer, e.g. when a neuron only has a lateral connection 554.

A multi-layer to single-layer connection may be a network of synaptic connections 533, 534, 553 between two or more neuron layers 530, 550 and a single successive neuron layer 570. In other words, neurons within a plurality of parallel neuron layers 530, 550 may be connected to neurons within a single successive neuron layer 570. The handshake controller 580 associated with the single neuron layer 570 may only receive a request 582 for firing its neurons 571, 572, 573 if both the handshake controllers 540, 560 associated with the parallel neuron layers 530, 550 forward or transmit a respective request 542, 562. This may be achieved by an element 544 that outputs a request signal 582 if the element 544 receives a request 542, 562 from all respective handshake controllers 540, 560 within a multi-layer, i.e. element 544 may operate substantially as a logic AND gate. Element 544 may, for example, be a Muller C-element or computer code. Handshake controller 580 may then provide the same acknowledgement 583 to both handshake controllers 540, 560.

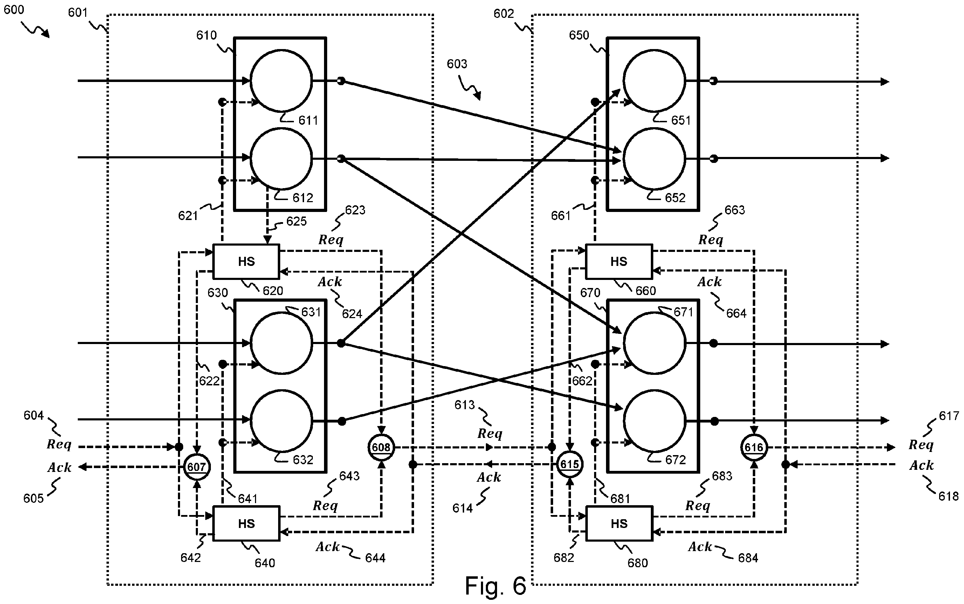

The spiking neural network may further comprise a multi-layer to multi-layer connection, i.e. a network of synaptic connections between two or more parallel neuron layers and two or more other parallel neuron layers. In other words, neurons within a plurality of parallel neuron layers, i.e. a first multi-layer, may be connected to neurons within a plurality of successive parallel neuron layers, i.e. a second multi-layer. Fig. 6 shows an example embodiment 600 of such a multi-layer to multi-layer connection between two parallel neuron layers 610, 630 and two other parallel neuron layers 650, 670. The parallel neuron layers of the first multi-layer 601 are connected to the parallel neuron layers 650, 670 in the second multi-layer 602 by means of synaptic connections 603.

Handshake controllers 620, 640 associated with the parallel neuron layers 610, 630 within the first multi-layer 601 may receive the same request 604 for triggering their respective neurons 611, 612, 631, 632. In response to this request the handshake controllers 620, 640 may forward or send a request 623, 643 for firing the neurons in the successive neuron layers, i.e. neuron layer 650 and 670. In other words, handshake controllers 620, 640 may forward a request to handshake controllers 660, 680 associated with the parallel neuron layers 650, 670 within the second multi-layer 602. This may be achieved by an element 608 that outputs a request signal 613 if the element 608 receives a request 623, 643 from all respective handshake controllers 620, 640 within multi-layer 601, i.e. element 608 may operate substantially as a logic AND gate. Element 608 may, for example, be a Muller C-element or computer code.

Handshake controllers 660, 680 may thus only receive a request 613 for firing their neurons 651, 652, 671, 672 when both handshake controllers 620, 630 transmit or forward a respective request 623, 643. After receiving request 613, handshake controllers 660, 680 may respond with a respective acknowledgement 662, 682 indicative for the readiness of neurons 651, 652 and 671, 672 to evaluate their firing condition, respectively. Only when the neurons within all parallel neuron layers 650, 670 within the multi-layer 602 are available to evaluate their firing condition may a resulting acknowledgment 614 be send to handshake controllers 620, 640. This may be achieved by an element 615 that outputs an acknowledgement signal 614 if the element 615 receives an acknowledgment 662, 682 from all respective handshake controllers 660, 680 within multi-layer 602, i.e. element 615 may operate substantially as a logic AND gate. Element 615 may, for example, be a Muller C-element or computer code.

Handshake controllers 620, 640 may thus only receive an acknowledgement 624, 644 when both handshake controllers acknowledge 662, 682 request 613. This allows synchronizing the firing of the neurons 611, 612, 631, 632 within the first multi-layer 601 and allows firing the neurons 611, 612, 631, 632 when the parallel successive neuron layers 650, 670 are ready to receive and/or process spikes, as handshake controllers 620, 640 may delay the generating of their respective tick signals 621, 641.

Alternatively or complementary, a handshake controller 620 may delay generating the tick signal 621 until receiving an additional signal 625 from a respective neuron 612 within the neuron layer 610 associated with handshake controller 620. A handshake controller 620 may receive such an additional signal 625 from one or more neurons within the associated neuron layer 610. The additional signal 625 may be indicative for the availability or readiness of a neuron 612 to fire. This can allow asynchronous firing of neurons 611, 612 within a neuron layer 610, as the tick signal 621 may be generated upon receiving the additional signal 625 from at least one respective neuron 612 within the neuron layer 610. For example, the tick signal 621 may be generated when handshake controller 620 receives a request 604 to fire the neurons 611, 612 and at least one of the neurons 611, 612 signals that it is ready to fire by sending the additional signal 625 to handshake controller 620.

Handshake controller 620 may further delay generating the tick signal 620 until receiving a request 604 for firing the neurons 611, 612, the additional signal 625, and the acknowledgement 624. This can further allow asynchronous firing of neurons 611, 612 within a neuron layer 610 while maintaining synchronization between successive neuron layers, e.g. between neuron layer 610 and 650, 670.

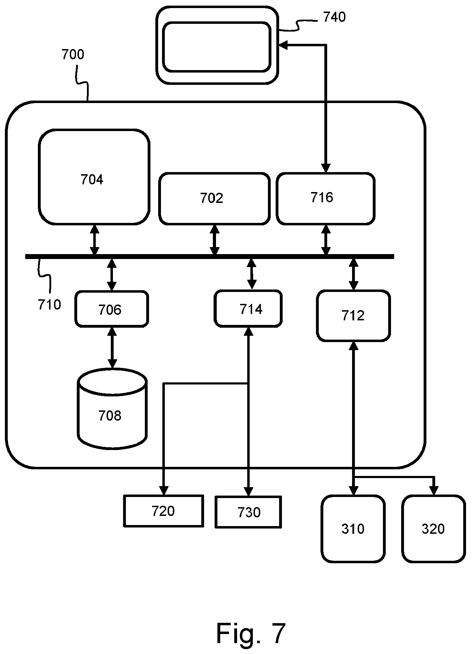

Fig. 7 shows a suitable computing system 700 enabling to implement embodiments of the above described method according to the invention. Computing system 700 may in general be formed as a suitable general-purpose computer and comprise a bus 710, a processor 702, a local memory 704, one or more optional input interfaces 714, one or more optional output interfaces 716, a communication interface 712, a storage element interface 706, and one or more storage elements 708. Bus 710 may comprise one or more conductors that permit communication among the components of the computing system 700. Processor 702 may include any type of conventional processor or microprocessor that interprets and executes programming instructions. Local memory 704 may include a random-access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator or user to input information to the computing device 700, such as a keyboard 720, a mouse 730, a pen, voice recognition and/or biometric mechanisms, a camera, etc. Output interface 716 may comprise one or more conventional mechanisms that output information to the operator or user, such as a display 740, etc. Communication interface 712 may comprise any transceiver-like mechanism such as for example one or more Ethernet interfaces that enables computing system 700 to communicate with other devices and/or systems such as for example, amongst others, input system 310 and/or output system 320. The communication interface 712 of computing system 700 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage element(s) 708 above is/are described as a local disk, in general any other suitable computer-readable media such as a removable magnetic disk, optical storage media such as a CD or DVD, -ROM disk, solid state drives, flash memory cards, etc. could be used.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer-implemented method for controlling the firing of neurons (232, 233, 234) within a neuron layer (231) of a spiking neural network (230), the method comprising:
- by a handshake controller (220) associated with the neuron layer, receiving (221) a request (251) for firing the neurons and, in response, generating (222) a tick signal (250);
- by the respective neurons, updating (212) a neuron state when receiving a neuron input (241, 242, 243); and
- upon receiving the tick signal, by the respective neurons, firing (215) the respective neurons that fulfil a firing condition based on the neuron state.

2. The computer-implemented method according to claim 1, further comprising, by the handshake controller (220), receiving the request (251) for firing the neurons from an input system (310) that is coupled to an input layer (231) of the spiking neural network (230).

3. The computer implemented method according to claim 2, further comprising, by the respective neurons, receiving the neuron input (241, 242, 243) from the input system (310).

4. The computer-implemented method according to any of the preceding claims, further comprising, by the handshake controller (220), transmitting a request (331) for accepting an output (244, 245, 246) of the spiking neural network (230) to an output system (320) that is coupled to an output layer (231) of the spiking neural network.

5. The computer-implemented method according to claim 4, further comprising, by the handshake controller (220), delaying the generating of the tick signal (250) until receiving an acknowledgment (332) from the output system (320), wherein the acknowledgement is indicative for a consent to receive the output (244, 245, 246) of the spiking neural network.

6. The computer-implemented method according to any of the preceding claims, wherein the spiking neural network (401) comprises a sequence of connected neuron layers (410, 430, 450) and a plurality of handshake controllers (420, 440, 460) associated with the respective neuron layers.

7. The computer-implemented method according to claim 6, wherein the spiking neural network is a recurrent spiking neural network, the spiking neural network comprises a multi-layer to single-layer connection, the spiking neural network comprises a single-layer to multi-layer connection, and/or the spiking neural network comprises a multi-layer to multi-layer connection.

8. The computer-implemented method according to claim 6 or 7, further comprising, receiving the request (422, 442) for firing the neurons from one or more handshake controllers (420, 440) associated with respective preceding neuron layers (410, 430).

9. The computer-implemented method according to claim 6 or 7, further comprising, by a handshake controller (420, 440) associated with a neuron layer (410, 430), forwarding a request (422, 442) for firing the neurons to one or more handshake controllers (430, 450) associated with respective successive neuron layers.

10. The computer-implemented method according to claim 9, further comprising, by the handshake controller, delaying the generating of the tick signal (421, 441, 461) until receiving an acknowledgment (423, 443) from the one or more handshake controllers (440, 460) associated with the respective successive neuron layers, wherein the acknowledgement is indicative for the neurons within the respective successive neuron layers being available to evaluate the firing condition.

11. The computer-implemented method according to any of the preceding claims, further comprising, by the handshake controller (220), delaying the generating of the tick signal (250) until receiving an additional signal from one or more neurons (232, 233, 234) within the neuron layer (231) associated with the handshake controller, wherein the additional signal is indicative for a respective neuron within the neuron layer being available to fire.

12. A processor configured to perform the computer implemented method according to any one of claims 1 to 11.

13. A computer program comprising instructions which, when the computer program is executed by a computer, cause the computer to perform the computer implemented method according to any one of claims 1 to 11.

14. A computer-readable medium comprising instructions which, when executed by a computer, cause the computer to perform the computer implemented method according to any of claims 1 to 11.
